# EUROPEAN PATENT APPLICATION

(11) **EP 4 672 357 A1**
(43) Date of publication of application: **31.12.2025**
(21) Application number: 24802561.1
(22) Date of filing: 23.02.2024
(51) Int. Cl.: H01M 4/133

(54) **NEGATIVE ELECTRODE SHEET, SECONDARY BATTERY AND ELECTRICAL APPARATUS**

(30) Priority: 10.05.2023 CN 202310521970
(71) Applicant: Contemporary Amperex Technology Co., Ltd., Ningde, Fujian 352100 (CN)
(72) Inventor: JI, Cheng, Ningde, Fujian 352100 (CN); LI, Baiqing, Ningde, Fujian 352100 (CN)
(74) Representative: Lorenz Seidler Gossel Part. mbB
(86) International application number: PCT/CN2024/078372
(87) International publication number: WO 2024/230273

(57) **Abstract**

This application provides a negative electrode plate, a secondary battery, and an electric apparatus. The negative electrode plate includes a current collector and a negative electrode film layer disposed on at least one side of the current collector, where the negative electrode film layer includes one or more active material layers, a negative electrode active material in the negative electrode film layer includes a first graphite negative electrode active material, a BET specific surface area of the first graphite negative electrode active material is denoted as A, and a BET specific surface area of the negative electrode active material in the negative electrode film layer is denoted as B, where A ≤ B, or a BET specific surface area of a material forming the negative electrode film layer is denoted as B', where A < B'.

## Description

### CROSS-REFERENCE TO RELATED APPLICATIONS

This application claims priority to Chinese Patent Application No. 202310521970.5, filed on May 10, 2023 and entitled "NEGATIVE ELECTRODE PLATE, SECONDARY BATTERY, AND ELECTRIC APPARATUS", the entirety of which is incorporated herein by reference.

### TECHNICAL FIELD

This application relates to the field of battery technology, and in particular, to a negative electrode plate, a secondary battery, and an electric apparatus.

### BACKGROUND

A lithium secondary battery includes a positive electrode containing a positive electrode active material, a negative electrode containing a negative electrode active material, a separator, and an electrolyte, and is a secondary battery that implements charging and discharging through the intercalation and deintercalation of lithium ions.

As a negative electrode material for lithium secondary batteries, lithium metal is primarily used in early stages. However, as charging and discharging progress, the growth of lithium atoms on the surface of lithium metal causes damage to the separator. Therefore, in recent years, carbon-based materials have been predominantly used.

Carbon-based negative electrode materials are generally artificial graphite or natural graphite. Natural graphite is formed from natural graphite ore through natural processes, and requires preliminary processes such as purification, shaping, and modification to make into a graphite negative electrode material that meets usage requirements. Artificial graphite, on the other hand, undergoes a high-temperature process above 2500°C to graphitize soft carbon materials, resulting in a graphite negative electrode material with better surface properties and cycling stability. However, when carbon-based negative electrode materials are used in secondary batteries of the lithium manganese iron phosphate system, high-temperature cycling performance and storage performance of the secondary batteries significantly deteriorate.

### SUMMARY

This application provides a negative electrode plate, a secondary battery, and an electric apparatus. The negative electrode plate improves the high-temperature cycling performance of secondary batteries in the lithium manganese iron phosphate system while maintaining excellent kinetic performance.

A first aspect of this application provides a negative electrode plate including a current collector and a negative electrode film layer disposed on at least one side of the current collector, where the negative electrode film layer includes one or more active material layers, a negative electrode active material in the negative electrode film layer includes a first graphite negative electrode active material, a BET specific surface area of the first graphite negative electrode active material is denoted as A, and a BET specific surface area of the negative electrode active material in the negative electrode film layer is denoted as B, where A ≤ B, or a BET specific surface area of a material forming the negative electrode film layer is denoted as B', where A < B'.

In this application, A < B or A ≤ B' indicates that the negative electrode film layer employs the first graphite negative electrode active material with a small specific surface area to reduce the overall BET specific surface area of the negative electrode film layer. That is, the negative electrode plate of this application uses the first graphite negative electrode active material with a low BET specific surface area to reduce the BET specific surface area of the negative electrode active material in the negative electrode film layer, thereby reducing the effective sites on the negative electrode surface for reactions that damage the SEI film, ensuring the stability of the negative electrode SEI film, and improving the cycling performance and storage performance of the battery.

In any embodiment of the first aspect of this application, the BET specific surface area of the first graphite negative electrode active material satisfies 0.5 m²/g ≤ A ≤ 1.3 m²/g; optionally, 0.8 m²/g ≤ A ≤ 1.22 m²/g. When the BET specific surface area of the first graphite negative electrode active material falls within the above range, the effective specific surface area of the surface active material layer of the corresponding negative electrode plate is smaller, thereby more effectively reducing side reactions on the negative electrode surface and improving the long-term stability of the SEI film. On the basis of improving the long-term stability of the SEI film, this can also significantly improve the cycling performance and storage performance of the battery cell while maintaining a high charging capability.

In any embodiment of the first aspect of this application, the BET specific surface area of the material forming the negative electrode film layer satisfies 0.55 m²/g ≤ B' ≤ 1.85 m²/g, optionally 0.89 m²/g ≤ B' ≤ 1.42 m²/g; or the BET specific surface area of the negative electrode active material in the negative electrode film layer satisfies 0.5 m²/g ≤ B ≤ 1.8 m²/g, optionally 0.82 m²/g ≤ B ≤ 1.38 m²/g. This further reduces the effective sites on the negative electrode surface for reactions that damage the SEI film, and further enhances the stability of the negative electrode SEI film, thereby improving the cycling performance of the battery.

In any embodiment of the first aspect of this application, the negative electrode film layer further includes a second graphite negative electrode active material, a BET specific surface area of the second graphite negative electrode active material is denoted as C, and A ≤ C, optionally B < C; optionally, 1.3 m²/g ≤ C ≤ 1.95 m²/g, further optionally 1.5 m²/g ≤ C ≤ 1.81 m²/g. The second graphite negative electrode active material with a larger BET specific surface area corresponds to a smaller particle size, thereby improving the charging capability of the negative electrode film layer. Further specifying the BET specific surface area of the second graphite negative electrode active material helps maximize the charging capability of the negative electrode film layer while controlling the BET specific surface area of the negative electrode active material.

In any embodiment of the first aspect of this application, the negative electrode film layer includes multiple active material layers, and the first graphite negative electrode active material is disposed in a same active material layer or in different active material layers.

In any embodiment of the first aspect of this application, the negative electrode film layer includes multiple active material layers, where an active material layer located at a surface is defined as a surface active material layer, an active material layer between the surface active material layer and the current collector is defined as an inner active material layer, a BET specific surface area of a negative electrode active material in the surface active material layer is denoted as D, and a BET specific surface area of a negative electrode active material in the inner active material layer is denoted as E; optionally, A ≤ D < B < E; optionally, 0.5 m²/g ≤ D ≤ 1.22 m²/g, optionally 0.82 m²/g ≤ D ≤ 1.22 m²/g, and/or 0.82 m²/g ≤ E ≤ 1.81 m²/g, optionally 0.82 m²/g ≤ E ≤ 1.52 m²/g. This more effectively limits the reaction sites of the negative electrode active material, reduces the likelihood of SEI film damage, and maximizes the overall charging capability of the negative electrode film layer.

In any embodiment of the first aspect of this application, the negative electrode film layer includes multiple active material layers, where an active material layer located at a surface is defined as a surface active material layer, an active material layer between the surface active material layer and the current collector is defined as an inner active material layer, a BET specific surface area of a material forming the surface active material layer is denoted as D', and a BET specific surface area of a material forming the inner active material layer is denoted as E'; optionally, D' < B' < E'; optionally, 0.59 m²/g ≤ D' ≤ 1.77 m²/g, further optionally 0.89 m²/g ≤ D' ≤ 1.59 m²/g, and/or 0.59 m²/g ≤ E' ≤ 1.87 m²/g, further optionally 0.89 m²/g ≤ E' ≤ 1.87 m²/g. The small BET specific surface area of the material forming the surface active material layer reduces the reaction sites for SEI film-damaging reactions, while the relatively larger BET specific surface area of the material forming the inner active material layer enhances the charging capability of the negative electrode plate.

In any embodiment of the first aspect of this application, a mass percentage of the first graphite negative electrode active material in the surface active material layer ranges from 10% to 98%; and/or a mass percentage of the second graphite negative electrode active material in the inner active material layer ranges from 10% to 98%. This fully utilizes the first graphite negative electrode active material to reduce the active sites for SEI film-damaging reactions, and utilizes the second graphite negative electrode active material to fully enhance the charging capability of the negative electrode plate.

In any embodiment of the first aspect of this application, the inner active material layer may be a single-layer structure or a multi-layer structure. When the inner active material layer is a multi-layer structure, those skilled in the art can specify the composition of each layer based on performance requirements.

A second aspect of this application provides a negative electrode plate including a current collector and a negative electrode film layer disposed on at least one side of the current collector, where the negative electrode film layer consists of one layer, a BET specific surface area of the negative electrode active material in the negative electrode film layer satisfies 0.5 m²/g ≤ B ≤ 1.8 m²/g, optionally 0.82 m²/g ≤ B ≤ 1.38 m²/g, or a BET specific surface area of a material forming the negative electrode film layer satisfies 0.55 m²/g ≤ B' ≤ 1.85 m²/g, optionally 0.89 m²/g ≤ B' ≤ 1.42 m²/g. The negative electrode film layer or the negative electrode active material of the negative electrode plate in the second aspect of this application has a small BET specific surface area, thereby reducing the effective sites on the negative electrode surface for reactions that damage the SEI film, ensuring the stability of the negative electrode SEI film, and improving the cycling performance and storage performance of the battery.

In any embodiment of the second aspect of this application, the negative electrode active material in the negative electrode film layer includes a first graphite negative electrode active material and optionally a second graphite negative electrode active material. A BET specific surface area of the first graphite negative electrode active material satisfies 0.5 m²/g ≤ A ≤ 1.3 m²/g; optionally, 0.8 m²/g ≤ A ≤ 1.22 m²/g. When the BET specific surface area of the first graphite negative electrode active material falls within the above range, the effective specific surface area of the corresponding negative electrode active material is smaller, thereby more effectively reducing side reactions on the negative electrode surface and maintaining the long-term stability of the SEI film. On the basis of maintaining the long-term stability of the SEI film, this can also significantly improve the cycling performance and storage performance of the battery cell while maintaining a high charging capability.

In any embodiment of the second aspect of this application, the negative electrode active material in the negative electrode film layer includes a second graphite negative electrode active material with a BET specific surface area of C, where A < C, and B < C; optionally, 1.3 m²/g ≤ C ≤ 1.95 m²/g, further optionally 1.5 m²/g ≤ C ≤ 1.81 m²/g. The second graphite negative electrode active material with a larger BET specific surface area corresponds to a smaller particle size, thereby improving the charging capability of the negative electrode film layer. Further specifying the BET specific surface area of the second graphite negative electrode active material helps maximize the charging capability of the negative electrode film layer while controlling the total BET specific surface area of the negative electrode active material.

A third aspect of this application provides a negative electrode plate including a current collector and a negative electrode film layer disposed on at least one side of the current collector, where the negative electrode film layer includes multiple active material layers, an active material layer located at a surface is defined as a surface active material layer, an active material layer between the surface active material layer and the current collector is defined as an inner active material layer, a BET specific surface area of a negative electrode active material in the surface active material layer is denoted as D', and a BET specific surface area of a negative electrode active material in the inner active material layer is denoted as E; optionally, D < E; optionally, 0.5 m²/g ≤ D ≤ 1.22 m²/g, optionally 0.82 m²/g ≤ D ≤ 1.22 m²/g, and/or 0.82 m²/g ≤ E ≤ 1.81 m²/g, optionally 0.82 m²/g ≤ E ≤ 1.52 m²/g; or a BET specific surface area of a material forming the surface active material layer is denoted as D', and a BET specific surface area of a material forming the inner active material layer is denoted as E'; optionally, D' < E'; optionally, 0.59 m²/g ≤ D' ≤ 1.77 m²/g, further optionally 0.89 m²/g ≤ D' ≤ 1.59 m²/g, and/or 0.59 m²/g ≤ E' ≤ 1.87 m²/g, further optionally 0.89 m²/g ≤ E' ≤ 1.87 m²/g.

The negative electrode plate in the third aspect of this application reduces the BET specific surface area of the negative electrode active material in the surface layer of the negative electrode film layer or reduces the BET specific surface area of the surface active material layer of the negative electrode film layer, thereby reducing the effective sites on the negative electrode surface for reactions that degrade the SEI film. This ensures the stability of the negative electrode SEI film, thereby improving the cycling performance and storage performance of the battery.

In any embodiment of the third aspect of this application, the negative electrode active material in the negative electrode film layer includes a first graphite negative electrode active material, a BET specific surface area of the first graphite negative electrode active material is denoted as A, and a BET specific surface area of the negative electrode active material in the negative electrode film layer is denoted as B, where A ≤ D ≤ B ≤ E. The negative electrode film layer employs the first graphite negative electrode active material with a small specific surface area to reduce the BET specific surface area of the negative electrode active material and the BET specific surface area of the surface active material layer, thereby more reliably reducing the effective sites on the negative electrode surface for reactions that damage the SEI film.

In any embodiment of the third aspect of this application, the BET specific surface area of the first graphite negative electrode active material satisfies 0.5 m²/g ≤ A ≤ 1.3 m²/g; optionally, 0.8 m²/g ≤ A ≤ 1.22 m²/g. When the BET specific surface area of the first graphite negative electrode active material falls within the above range, the effective specific surface area of the surface active material layer of the corresponding negative electrode plate is smaller, thereby more effectively reducing side reactions on the negative electrode surface and maintaining the long-term stability of the SEI film. On the basis of maintaining the long-term stability of the SEI film, this can also significantly improve the cycling performance and storage performance of the battery cell while maintaining a high charging capability.

In any embodiment of the third aspect of this application, the BET specific surface area of the negative electrode active material in the negative electrode film layer satisfies 0.5 m²/g ≤ B ≤ 1.8 m²/g, optionally 0.82 m²/g ≤ B ≤ 1.38 m²/g. This further reduces the effective sites on the negative electrode surface for reactions that damage the SEI film, and further enhances the stability of the negative electrode SEI film, thereby improving the cycling performance and storage performance of the battery.

In any embodiment of the third aspect of this application, the negative electrode film layer further includes a second graphite negative electrode active material, a BET specific surface area of the second graphite negative electrode active material is denoted as C, A < C, and B < C; optionally, 1.3 m²/g ≤ C ≤ 1.95 m²/g, further optionally 1.5 m²/g ≤ C ≤ 1.81 m²/g. The second graphite negative electrode active material with a larger BET specific surface area corresponds to a smaller particle size, thereby improving the charging capability of the negative electrode film layer. Further specifying the BET specific surface area of the second graphite negative electrode active material helps maximize the charging capability of the negative electrode film layer while controlling the BET specific surface area of the negative electrode active material.

In any embodiment of the third aspect of this application, a mass percentage of the first graphite negative electrode active material in the surface active material layer ranges from 10% to 98%; and/or a mass percentage of the second graphite negative electrode active material in the inner active material layer ranges from 10% to 98%. This fully utilizes the first graphite negative electrode active material to reduce the active sites for SEI film-damaging reactions, and utilizes the second graphite negative electrode active material to fully enhance the charging capability of the negative electrode plate.

In any embodiment of the first aspect, second aspect, and third aspects of this application, a mass ratio of the first graphite negative electrode active material to the second graphite negative electrode active material ranges from 1:9 to 9:1, optionally from 5:5 to 8:2. Appropriately increasing the mass proportion of the first graphite negative electrode active material helps reduce the number of active sites in the negative electrode plate for reactions that damage the SEI film, thereby better enhancing the cycling performance and storage capability of the battery.

In any embodiment of the first aspect, second aspect, and third aspect of this application, Dᵥ50 of the first graphite negative electrode active material ranges from 10 µm to 25 µm, optionally from 15 µm to 22 µm. In some embodiments, Dᵥ50 of the second graphite negative electrode active material ranges from 7 µm to 10 µm, optionally from 8 µm to 10 µm. This further controls the BET specific surface area of the graphite negative electrode active materials.

In any embodiment of the first aspect, second aspect, and third aspect of this application, the first graphite negative electrode active material and the second graphite negative electrode active material each independently include any one or more of natural graphite, artificial graphite, graphitized carbon fiber, and graphitized mesocarbon microbeads.

In any embodiment of the first aspect, second aspect, and third aspect of this application, the negative electrode plate is a negative electrode plate used in a secondary battery, and during charging of the secondary battery, a potential of a negative electrode in a full battery reaches 0 mV before a voltage of the full battery reaches an upper limit voltage; optionally, a positive electrode active material of the secondary battery includes a lithium manganese iron phosphate-based positive electrode active material. This improves the cycling performance and storage performance of the secondary battery without affecting the charging capability.

A fourth aspect of this application provides a secondary battery, where the secondary battery includes a positive electrode plate and a negative electrode plate. The negative electrode plate of the secondary battery in this application includes the negative electrode plate according to any one of the above embodiments of this application.

In any embodiment of the fourth aspect of this application, the secondary battery in this application is a secondary battery of the lithium manganese iron phosphate system, and the positive electrode plate includes a positive electrode active material, where the positive electrode active material includes a lithium manganese iron phosphate-based positive electrode active material; optionally, the lithium manganese iron phosphate-based positive electrode active material includes a doped lithium manganese iron phosphate-based positive electrode active material or a coated lithium manganese iron phosphate-based positive electrode active material; optionally, the lithium manganese iron phosphate-based positive electrode active material includes Li element, P element, Fe element, and M element, where the M element includes Mn and non-Mn elements.

In any embodiment of the fourth aspect of this application, the non-Mn element includes one or both of a first doping element and a second doping element, where the first doping element is doped at a manganese site, and the second doping element is doped at a phosphorus site; optionally, the first doping element includes one or more elements selected from a group of Zn, Al, Na, K, Mg, Mo, W, Ti, V, Zr, Fe, Ni, Co, Ga, Sn, Sb, Nb, and Ge; further optionally, the first doping element includes at least two elements selected from a group of Fe, Ti, V, Ni, Co, and Mg; and optionally, the second doping element includes one or more elements selected from a group of B (boron), S, Si, and N. This further enhances the compositional stability of the positive electrode material and reduces positive electrode side reactions.

In any embodiment of the fourth aspect of this application, the lithium manganese iron phosphate-based positive electrode active material includes at least one of the following materials: LiMn_{1-y}Fe_{y}PO₄, where y is any value in a range of 0.001 to 0.5; Li₁₊ₜMn_{1-c}Fe_{c}P_{1-z}R_{z}O₄, where t is any value in a range of -0.100 to 0.100, c is any value in a range of 0.001 to 0.500, z is any value in a range of 0.001 to 0.100, and R includes one or more elements selected from B, S, Si, and N; and Li_{1+w}AₘMn₁₋ᵤEᵤP₁₋ₐRₐO₄₋ₙDₙ, where A includes one or more elements selected from Zn, Al, Na, K, Mg, Nb, Mo, and W, E includes one or more elements selected from Zn, Al, Na, K, Mg, Mo, W, Ti, V, Zr, Fe, Ni, Co, Ga, Sn, Sb, Nb, and Ge, R includes one or more elements selected from B, S, Si, and N, D includes one or more elements selected from S, F, Cl, and Br, w is any value in a range of -0.100 to 0.100, m is any value in a range of 0.001 to 0.1, u is any value in a range of 0.001 to 0.500, a is any value in a range of 0.001 to 0.100, n is any value in a range of 0.001 to 0.1, and Li_{1+w}AₘMn₁₋ᵤEᵤP₁₋ₐRₐO₄₋ₙDₙ is electrically neutral. Doping elements in lithium manganese iron phosphate helps enhance the structural stability of the lithium manganese iron phosphate positive electrode material and the rate performance of the secondary battery containing this material.

A fifth aspect of this application provides an electric apparatus, where the electric apparatus includes a secondary battery. The secondary battery includes the secondary battery in any one of the above embodiments, allowing for better cycling performance.

### BRIEF DESCRIPTION OF DRAWINGS

To more clearly illustrate the technical solutions of the embodiments of this application, the drawings required for use in the embodiments of this application are briefly described below. It is apparent that the drawings described below are merely some embodiments of this application, and those of ordinary skill in the art can obtain other drawings based on these drawings without creative effort.
FIG. 1 is a schematic diagram of a secondary battery cell according to an embodiment of this application.
FIG. 2 is an exploded view of the secondary battery cell according to the embodiment of this application shown in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application in FIG. 4.
FIG. 6 is a schematic diagram of an electric apparatus using a secondary battery in an embodiment of this application as a power source.

The accompanying drawings are not drawn to scale.

Description of reference signs:
1 battery pack; 2 upper box body; 3 lower box body; 4 battery module; 5 secondary battery cell; 51 housing; 52 electrode assembly; and 53 top cover assembly.

### DESCRIPTION OF EMBODIMENTS

The embodiments of this application are described in further detail below with reference to the accompanying drawings and examples. The detailed descriptions of the following examples and the accompanying drawings are used to exemplarily illustrate the principles of this application but cannot be used to limit the scope of this application, meaning that this application is not limited to the described embodiments.

The following details the embodiments specifically disclosing the negative electrode plate, secondary battery, and electric apparatus of this application with appropriate reference to the drawings. However, unnecessary detailed descriptions may be omitted. For example, detailed descriptions of well-known matters or redundant descriptions of substantially identical structures may be omitted. This is to avoid making the following description unnecessarily lengthy and to facilitate understanding by those skilled in the art. Additionally, the drawings and the following descriptions are provided to enable those skilled in the art to fully understand this application and are not intended to limit the subject matter recited in the claims.

"Ranges" disclosed in this application are defined in the form of lower and upper limits. A given range is defined by selecting one lower limit and one upper limit, where the selected lower and upper limits define the boundaries of that specific range. Ranges defined in this manner may include or exclude the endpoints and may be arbitrarily combined, meaning that any lower limit may be combined with any upper limit to form a range. For example, if ranges of 60-120 and 80-110 are provided for a specific parameter, it is understood that ranges of 60-110 and 80-120 can also be envisioned. Additionally, if minimum range values of 1 and 2 are listed, and maximum range values of 3, 4, and 5 are listed, the following ranges can all be anticipated: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. Additionally, when a parameter is expressed as an integer ≥ 2, it is equivalent to disclosing that the parameter is, for example, an integer 2, 3, 4, 5, 6, 7, 8, 9, 10, 11, 12, and so on.

Unless otherwise specified, all embodiments and optional embodiments of this application can be combined with each other to form new technical solutions.

Unless otherwise specified, all technical features and optional technical features of this application can be combined with each other to form new technical solutions.

Unless otherwise specified, all steps in this application can be performed sequentially or randomly, preferably sequentially. For example, a method including steps (a) and (b) indicates that the method may include steps (a) and (b) performed sequentially or may include steps (b) and (a) performed sequentially. For example, the method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or exclusive. For example, "include" and "contain" may indicate that other components not listed may also be included or contained, or only the listed components may be included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

### [Negative electrode plate]

Existing lithium-ion batteries typically use graphite as negative electrodes. Graphite primarily facilitates the intercalation and deintercalation of lithium ions during charging and discharging. In secondary batteries of the lithium manganese iron phosphate system (that is, secondary batteries where the positive electrode active material is a lithium manganese iron phosphate-based positive electrode active material), during the charging, discharging, and high SOC storage processes, side reactions continuously take place on the surface of the positive electrode plate, and the substances produced such as free radicals diffuse to the negative electrode through the electrolyte, continuously damaging the SEI film on the negative electrode surface. Therefore, when such negative electrode materials are used in secondary batteries of the lithium manganese iron phosphate system, the high-temperature cycling performance and storage performance significantly deteriorate.

To address this issue, those skilled in the art have identified that the root cause of damage to the SEI film on the negative electrode surface lies in the continuous side reactions occurring on the surface of the positive electrode plate. Therefore, attempts are typically made to modify the positive electrode active material, such as doping elements to enhance structural stability, coating to reduce the occurrence of side reactions, or improving the electrolyte by adding novel additives to reduce side reactions. However, these improvement approaches are technically complex and have consequential impacts on other battery performances. This application breaks conventions by attempting to improve the negative electrode plate, so as to reduce the active sites on the negative electrode surface and further slow the damage to the SEI film on the negative electrode surface. Based on the above attempt and research, a first embodiment of this application provides a negative electrode plate including a current collector and a negative electrode film layer disposed on at least one side of the current collector, where the negative electrode film layer includes one or more active material layers, a negative electrode active material in the negative electrode film layer includes a first graphite negative electrode active material, a BET specific surface area of the first graphite negative electrode active material is denoted as A, and a BET specific surface area of the negative electrode active material in the negative electrode film layer is denoted as B, where A ≤ B, or a BET specific surface area of a material forming the negative electrode film layer is denoted as B', where A< B'.

The material forming the negative electrode film layer includes not only the negative electrode active material but typically also includes components such as a conductive agent and a binder. Although the BET specific surface area of the material forming the negative electrode film layer is not exactly equal to the BET specific surface area of the negative electrode active material in the negative electrode film layer, the two are clearly correlated. Since the negative electrode active material constitutes the vast majority of the weight in the negative electrode film layer, when the BET specific surface area of the negative electrode active material is smaller, the BET specific surface area of the material forming the corresponding negative electrode film layer is also smaller, or conversely, when the BET specific surface area of the material forming the negative electrode film layer is smaller, the BET specific surface area of the negative electrode active material in the negative electrode film layer is also smaller.

The condition A < B' or A ≤ B of the negative electrode plate of this application indicates that the negative electrode film layer employs a first graphite negative electrode active material with a smaller specific surface area to reduce the overall BET specific surface area of the negative electrode film layer or the BET specific surface area of the negative electrode active material in the negative electrode film layer, meaning that the negative electrode plate of this application reduces the effective sites on the negative electrode surface for reactions that damage the SEI film by using a first graphite negative electrode active material with a lower BET specific surface area, thereby ensuring the stability of the negative electrode SEI film and improving the cycling performance and storage performance of the battery.

The method for measuring the BET specific surface area of the material forming the negative electrode film layer includes: scraping powder of the negative electrode film layer from the electrode plate, and then carrying out test in accordance with GB/T 19587-2017/ISO 9277:2010.

The method for measuring the BET specific surface area of the negative electrode active material in the negative electrode film layer includes: scraping powder of the negative electrode film layer from the electrode plate, dispersing the powder in N-methylpyrrolidone, performing solid-liquid separation and drying to obtain a negative electrode active material, and the measuring the BET specific surface area of the negative electrode active material in accordance with GB/T 19587-2017/ISO 9277:2010.

When the above negative electrode plate is applied to the lithium iron phosphate battery system and the ternary battery system, the charging capability of the battery cells decreases. However, when the above negative electrode plate is applied to secondary batteries of the lithium manganese iron phosphate system, the negative electrode plate can effectively improve the high-temperature cycling performance and storage performance of the secondary batteries of the lithium manganese iron phosphate system without affecting the charging capability of the battery cells, allowing the secondary batteries of the lithium manganese iron phosphate system to maintain excellent kinetic performance.

The applicant is not yet clear about the mechanism behind the above differences but speculates the possible causes as follows: The charging capability of lithium iron phosphate and ternary systems is usually limited by the negative electrode, as the potential of the negative electrode in the full battery reaches 0 mV before the voltage of the full battery reaches the upper limit voltage during charging. In secondary batteries of the lithium manganese iron phosphate system, due to the relatively large polarization of the lithium manganese iron phosphate-based positive electrode material, the charging capability of the battery cell in the high SOC region is limited by the positive electrode rather than the negative electrode. Therefore, before the negative electrode reaches 0 mV, the secondary battery has already reached the upper limit voltage. That is the reason why a graphite negative electrode active material with a small BET specific surface area in the negative electrode plate of secondary batteries of the lithium manganese iron phosphate system does not deteriorate the charging capability of the battery.

The negative electrode plate may include a negative electrode film layer disposed on one side of the current collector, or include negative electrode film layers disposed on two sides of the current collector. When negative electrode film layers are disposed on two sides of the current collector, the two negative electrode film layers are independent of each other. The solutions in the following embodiments of this application can be applied to the negative electrode film layer on either side.

In some embodiments of this application, 0.5 m²/g ≤ A ≤ 1.3 m²/g, for example, being 0.5 m²/g, 0.53 m²/g, 0.8 m²/g, 0.82 m²/g, 1 m²/g, 1.03 m²/g, 1.5 m²/g, or 1.3 m²/g; optionally, 0.8 m²/g ≤ A ≤ 1.22 m²/g. When the BET specific surface area of the first graphite negative electrode active material falls within the above range, the effective specific surface area of the surface active material layer of the corresponding negative electrode plate is smaller, thereby more effectively reducing side reactions on the negative electrode surface and maintaining the long-term stability of the SEI film. On the basis of improving the long-term stability of the SEI film, this can also significantly improve the cycling performance and storage performance of the battery cell while maintaining a high charging capability.

In some embodiments of this application, the BET specific surface area of the material forming the negative electrode film layer satisfies 0.55 m²/g ≤ B' ≤ 1.85 m²/g, for example, being 0.55 m²/g, 0.59 m²/g, 0.7 m²/g, 0.8 m²/g, 0.89 m²/g, 1.0 m²/g, 1.1 m²/g, 1.2 m²/g, 1.25 m²/g, 1.3 m²/g, 1.35 m²/g, 1.4 m²/g, 1.5 m²/g, 1.6 m²/g, 1.65 m²/g, 1.7 m²/g, 1.75 m²/g, 1.8 m²/g, or 1.85 m²/g; optionally 0.89 m²/g ≤ B' ≤ 1.42 m²/g. Controlling the specific surface area reduces the effective sites on the negative electrode surface for reactions that damage the SEI film, and enhances the stability of the negative electrode SEI film, thereby improving the cycling performance of the battery.

In some embodiments of this application, the BET specific surface area of the negative electrode active material in the negative electrode film layer satisfies 0.5 m²/g ≤ B ≤ 1.8 m²/g, for example, being 0.5 m²/g, 0.52 m²/g, 0.8 m²/g, 0.82 m²/g, 0.9 m²/g, 1.0 m²/g, 1.1 m²/g, 1.2 m²/g, 1.25 m²/g, 1.3 m²/g, 1.35 m²/g, 1.4 m²/g, 1.5 m²/g, 1.6 m²/g, 1.65 m²/g, 1.7 m²/g, 1.75 m²/g, or 1.8 m²/g; optionally 0.82 m²/g ≤ B ≤ 1.38 m²/g. Controlling the specific surface area reduces the effective sites on the negative electrode surface for reactions that damage the SEI film, and enhances the stability of the negative electrode SEI film, thereby improving the cycling performance of the battery.

In some embodiments of this application, the negative electrode film layer further includes a second graphite negative electrode active material, a BET specific surface area of the second graphite negative electrode active material is denoted as C, and A ≤ C, optionally B < C; optionally, 1.3 m²/g ≤ C ≤ 1.95 m²/g, for example, being 1.3 m²/g, 1.35 m²/g, 1.4 m²/g, 1.5 m²/g, 1.6 m²/g, 1.65 m²/g, 1.7 m²/g, 1.75 m²/g, 1.8 m²/g, 1.85 m²/g, 1.9 m²/g, or 1.95 m²/g, further optionally 1.5 m²/g ≤ C ≤ 1.81 m²/g. The second graphite negative electrode active material with a larger BET specific surface area corresponds to a smaller particle size, thereby improving the charging capability of the negative electrode film layer. Further specifying the BET specific surface area of the second graphite negative electrode active material helps maximize the charging capability of the negative electrode film layer while controlling the BET specific surface area of the negative electrode active material.

Graphite negative electrode active materials with two different BET specific surface areas are mixed to produce the first graphite negative electrode active material and the second graphite negative electrode active material in some embodiments of this application, thereby allowing more flexible adjustment of the BET specific surface areas of the first graphite negative electrode active material and the second graphite negative electrode active material.

The negative electrode film layer of this application includes one active material layer or multiple active material layers. When the negative electrode film layer includes one active material layer, the negative electrode active material of the active material layer is the first graphite negative electrode active material, where A = B; or the active material layer is a combination of the first graphite negative electrode active material and the second graphite negative electrode active material, or further includes other negative electrode active materials, where A < B.

In some embodiments, the negative electrode film layer includes multiple active material layers, and the first graphite negative electrode active material is disposed in a same active material layer or in different active material layers. For example, when the negative electrode film layer on one side includes two active material layers, the negative electrode active material of the active material layer closer to the current collector may be a mixture of the first graphite negative electrode active material and the second graphite negative electrode active material, while the negative electrode active material of the active material layer above may be the first graphite negative electrode active material or the second graphite negative electrode active material; or the negative electrode active material of the active material layer closer to the current collector may be the first graphite negative electrode active material or the second graphite negative electrode active material, while the negative electrode active material of the active material layer above may be a mixture of the first graphite negative electrode active material and the second graphite negative electrode active material; or the two active material layers may both include the first graphite negative electrode active material and the second graphite negative electrode active material, where their proportions may be set differently to form distinct active material layers. When a same active material layer includes both the first graphite negative electrode active material and the second graphite negative electrode active material, their proportions are not particularly limited.

Since reactions that damage the negative electrode SEI film typically start from the surface of the negative electrode film layer, the effective specific surface area of the surface layer of the negative electrode film layer is further controlled to further limit the occurrence of the reactions that damage the SEI film. In some embodiments, the negative electrode film layer includes multiple active material layers, an active material layer located at a surface is defined as a surface active material layer, an active material layer between the surface active material layer and the current collector is defined as an inner active material layer, a BET specific surface area of a negative electrode active material in the surface active material layer is denoted as D, and a BET specific surface area of a negative electrode active material in the inner active material layer is denoted as E; optionally, A ≤ D < B < E; optionally, 0.5 m²/g ≤ D ≤ 1.22 m²/g, for example, being 0.5 m²/g, 0.55 m²/g, 0.6 m²/g, 0.7 m²/g, 0.8 m²/g, 0.89 m²/g, 1.0 m²/g, 1.1 m²/g, 1.2 m²/g, or 1.22 m²/g, optionally 0.82 m²/g ≤ D ≤ 1.22 m²/g, and/or 0.82 m²/g ≤ E ≤ 1.81 m²/g, for example, being 0.82 m²/g, 0.9 m²/g, 0.95 m²/g, 1.0 m²/g, 1.1 m²/g, 1.2 m²/g, 1.25 m²/g, 1.3 m²/g, 1.35 m²/g, 1.4 m²/g, 1.45 m²/g, 1.5 m²/g, 1.6 m²/g, 1.65 m²/g, 1.7 m²/g, 1.75 m²/g, or 1.8 m²/g, optionally 0.82 m²/g ≤ E ≤ 1.52 m²/g. This more effectively reduces the likelihood of SEI film-damaging reactions, and maximizes the overall charging capability of the negative electrode film layer.

The method for measuring the BET specific surface area of the negative electrode active material in the surface active material layer and the BET specific surface area of the negative electrode active material in the inner active material layer includes:
sequentially scraping powder of the surface active material layer and the inner active material layer from the electrode plate, dispersing the powder in N-methylpyrrolidone, performing solid-liquid separation and drying to obtain a negative electrode active material, and measuring the respective BET specific surface areas in accordance with GB/T 19587-2017/ISO 9277:2010.

In some embodiments, the negative electrode film layer includes multiple active material layers, an active material layer located at a surface is defined as a surface active material layer, an active material layer between the surface active material layer and the current collector is defined as an inner active material layer, a BET specific surface area of the material forming the surface active material layer is denoted as D', and a BET specific surface area of a material forming the inner active material layer is denoted as E'; optionally, D' < B' < E'; optionally, 0.59 m²/g ≤ D' ≤ 1.77 m²/g, for example, being 0.6 m²/g, 0.7 m²/g, 0.8 m²/g, 0.82 m²/g, 0.9 m²/g, 0.95 m²/g, 1.0 m²/g, 1.1 m²/g, 1.2 m²/g, 1.25 m²/g, 1.3 m²/g, 1.35 m²/g, 1.4 m²/g, 1.45 m²/g, 1.5 m²/g, 1.6 m²/g, 1.65 m²/g, 1.7 m²/g, 1.75 m²/g, or 1.77 m²/g, further optionally 0.89 m²/g ≤ D' ≤ 1.59 m²/g, and/or 0.59 m²/g ≤ E' ≤ 1.87 m²/g, for example, being 0.6 m²/g, 0.7 m²/g, 0.8 m²/g, 0.82 m²/g, 0.9 m²/g, 0.95 m²/g, 1.0 m²/g, 1.1 m²/g, 1.2 m²/g, 1.25 m²/g, 1.3 m²/g, 1.35 m²/g, 1.4 m²/g, 1.45 m²/g, 1.5 m²/g, 1.6 m²/g, 1.65 m²/g, 1.7 m²/g, 1.75 m²/g, 1.77 m²/g, 1.8 m²/g, 1.85 m²/g, or 1.87 m²/g, further optionally 0.89 m²/g ≤ E' ≤ 1.87 m²/g. The small BET specific surface area of the material forming the surface active material layer reduces the reaction sites for SEI film-damaging reactions, while the relatively larger BET specific surface area of the material forming the inner active material layer enhances the charging capability of the negative electrode plate.

In some embodiments, an active material in the surface active material layer includes the first graphite negative electrode active material, or includes the first graphite negative electrode active material and the second graphite negative electrode active material. In some embodiments, a thickness of the surface active material layer is set to 40 µm to 120 µm.

In some embodiments, to maximize the overall performance of the battery, a mass percentage of the first graphite negative electrode active material in the surface active material layer ranges from 10% to 98%; and/or a mass percentage of the second graphite negative electrode active material in the inner active material layer ranges from 10% to 98%. This fully utilizes the first graphite negative electrode active material to reduce the active sites for SEI film-damaging reactions, and utilizes the second graphite negative electrode active material to fully enhance the charging capability of the negative electrode plate. To further enhance the above effects, in some embodiments, the mass percentage of the first graphite negative electrode active material in the surface active material layer ranges from 50% to 98%; and the mass percentage of the second graphite negative electrode active material in the inner active material layer ranges from 50% to 98%.

In some embodiments, the inner active material layer may be a single-layer structure or a multi-layer structure. When the inner active material layer is a multi-layer structure, those skilled in the art can specify the composition of each layer based on performance requirements.

To address the above technical issues, a second embodiment of this application provides a negative electrode plate including a current collector and a negative electrode film layer disposed on at least one side of the current collector, where the negative electrode film layer includes one layer, a BET specific surface area of the negative electrode active material in the negative electrode film layer satisfies 0.5 m²/g ≤ B ≤ 1.8 m²/g, for example, being 0.5 m²/g, 0.52 m²/g, 0.8 m²/g, 0.82 m²/g, 0.9 m²/g, 1.0 m²/g, 1.1 m²/g, 1.2 m²/g, 1.25 m²/g, 1.3 m²/g, 1.35 m²/g, 1.4 m²/g, 1.5 m²/g, 1.6 m²/g, 1.65 m²/g, 1.7 m²/g, 1.75 m²/g, or 1.8 m²/g, optionally 0.82 m²/g ≤ B ≤ 1.38 m²/g, or a BET specific surface area of a material forming the negative electrode film layer satisfies 0.55 m²/g ≤ B' ≤ 1.85 m²/g, for example, being 0.55 m²/g, 0.59 m²/g, 0.7 m²/g, 0.8 m²/g, 0.89 m²/g, 1.0 m²/g, 1.1 m²/g, 1.2 m²/g, 1.25 m²/g, 1.3 m²/g, 1.35 m²/g, 1.4 m²/g, 1.5 m²/g, 1.6 m²/g, 1.65 m²/g, 1.7 m²/g, 1.75 m²/g, 1.8 m²/g, or 1.85 m²/g, optionally 0.89 m²/g ≤ B' ≤ 1.42 m²/g.

Based on the same principle, the negative electrode film layer or the negative electrode active material of the negative electrode plate has a small BET specific surface area, thereby reducing the effective sites on the negative electrode surface for reactions that damage the SEI film, ensuring the stability of the negative electrode SEI film, and improving the cycling performance and storage performance of the battery.

In some embodiments, the negative electrode active material in the negative electrode film layer includes a first graphite negative electrode active material and optionally a second graphite negative electrode active material. A BET specific surface area of the first graphite negative electrode active material satisfies 0.5 m²/g ≤ A ≤ 1.3 m²/g; optionally, 0.8 m²/g ≤ A ≤ 1.22 m²/g. When the BET specific surface area of the first graphite negative electrode active material falls within the above range, the effective specific surface area of the corresponding negative electrode active material is smaller, thereby more effectively reducing side reactions on the negative electrode surface and maintaining the long-term stability of the SEI film. On the basis of maintaining the long-term stability of the SEI film, this can also significantly improve the cycling performance and storage performance of the battery cell while maintaining a high charging capability.

In some embodiments, the negative electrode active material in the negative electrode film layer includes a second graphite negative electrode active material with a BET specific surface area C, where A < C, and B < C; optionally, 1.3 m²/g ≤ C ≤ 1.95 m²/g, for example, being 1.3 m²/g, 1.35 m²/g, 1.4 m²/g, 1.5 m²/g, 1.6 m²/g, 1.65 m²/g, 1.7 m²/g, 1.75 m²/g, 1.8 m²/g, 1.85 m²/g, 1.9 m²/g, or 1.95 m²/g, further optionally 1.5 m²/g ≤ C ≤ 1.81 m²/g. The second graphite negative electrode active material with a larger BET specific surface area corresponds to a smaller particle size, thereby improving the charging capability of the negative electrode film layer. Further specifying the BET specific surface area of the second graphite negative electrode active material helps maximize the charging capability of the negative electrode film layer while controlling the total BET specific surface area of the negative electrode active material.

To address the above technical issues, a third embodiment of this application provides a negative electrode plate including a current collector and a negative electrode film layer disposed on at least one side of the current collector, where the negative electrode film layer includes multiple active material layers, an active material layer located at a surface is defined as a surface active material layer, an active material layer between the surface active material layer and the current collector is defined as an inner active material layer, a BET specific surface area of a negative electrode active material in the surface active material layer is denoted as D, and a BET specific surface area of a negative electrode active material in the inner active material layer is denoted as E; optionally, D < E; optionally, 0.5 m²/g ≤ D ≤ 1.22 m²/g, for example, being 0.5 m²/g, 0.55 m²/g, 0.6 m²/g, 0.7 m²/g, 0.8 m²/g, 0.89 m²/g, 1.0 m²/g, 1.1 m²/g, 1.2 m²/g, or 1.22 m²/g, optionally 0.82 m²/g ≤ D ≤ 1.22 m²/g, and/or 0.82 m²/g ≤ E ≤ 1.81 m²/g, for example, being 0.82 m²/g, 0.9 m²/g, 0.95 m²/g, 1.0 m²/g, 1.1 m²/g, 1.2 m²/g, 1.25 m²/g, 1.3 m²/g, 1.35 m²/g, 1.4 m²/g, 1.45 m²/g, 1.5 m²/g, 1.6 m²/g, 1.65 m²/g, 1.7 m²/g, 1.75 m²/g, or 1.8 m²/g, optionally 0.82 m²/g ≤ E ≤ 1.52 m²/g; or a BET specific surface area of a material forming the surface active material layer is denoted as D', and a BET specific surface area of a material forming the inner active material layer is denoted as E'; optionally, D' < E'; optionally, 0.59 m²/g ≤ D' ≤ 1.77 m²/g, for example, being 0.6 m²/g, 0.7 m²/g, 0.8 m²/g, 0.82 m²/g, 0.9 m²/g, 0.95 m²/g, 1.0 m²/g, 1.1 m²/g, 1.2 m²/g, 1.25 m²/g, 1.3 m²/g, 1.35 m²/g, 1.4 m²/g, 1.45 m²/g, 1.5 m²/g, 1.6 m²/g, 1.65 m²/g, 1.7 m²/g, 1.75 m²/g, or 1.77 m²/g, further optionally 0.89 m²/g ≤ D' ≤ 1.59 m²/g, and/or 0.59 m²/g ≤ E' ≤ 1.87 m²/g, for example, being 0.6 m²/g, 0.7 m²/g, 0.8 m²/g, 0.82 m²/g, 0.9 m²/g, 0.95 m²/g, 1.0 m²/g, 1.1 m²/g, 1.2 m²/g, 1.25 m²/g, 1.3 m²/g, 1.35 m²/g, 1.4 m²/g, 1.45 m²/g, 1.5 m²/g, 1.6 m²/g, 1.65 m²/g, 1.7 m²/g, 1.75 m²/g, 1.77 m²/g, 1.8 m²/g, 1.85 m²/g, or 1.87 m²/g, further optionally 0.89 m²/g ≤ E' ≤ 1.87 m²/g.

The negative electrode plate reduces the BET specific surface area of the negative electrode active material in the surface layer of the negative electrode film layer or the BET specific surface area of the surface active material layer of the negative electrode film layer, thereby reducing the effective sites on the negative electrode surface for reactions that damage the SEI film. This ensures the stability of the negative electrode SEI film, thereby improving the cycling performance and storage performance of the battery.

In some embodiments, the negative electrode active material in the negative electrode film layer includes a first graphite negative electrode active material, a BET specific surface area of the first graphite negative electrode active material is denoted as A, and a BET specific surface area of the negative electrode active material in the negative electrode film layer is denoted as B, where A ≤ D ≤ B ≤ E. The negative electrode film layer employs the first graphite negative electrode active material with a small specific surface area to reduce the BET specific surface area of the negative electrode active material and the BET specific surface area of the surface active material layer, thereby more reliably reducing the effective sites on the negative electrode surface for reactions that damage the SEI film. Additionally, the first graphite negative electrode material is optionally disposed at least in the surface active material layer, allowing for better control over the BET specific surface area of the negative electrode active material in the surface active material layer, thereby achieving A ≤ D.

In some embodiments, the BET specific surface area of the first graphite negative electrode active material satisfies 0.5 m²/g ≤ A ≤ 1.3 m²/g, for example, being 0.5 m²/g, 0.53 m²/g, 0.8 m²/g, 0.82 m²/g, 1 m²/g, 1.03 m²/g, 1.5 m²/g, or 1.3 m²/g; optionally, 0.8 m²/g ≤ A ≤ 1.22 m²/g. When the BET specific surface area of the first graphite negative electrode active material falls within the above range, the effective specific surface area of the surface active material layer of the corresponding negative electrode plate is smaller, thereby more effectively reducing side reactions on the negative electrode surface and maintaining the long-term stability of the SEI film. On the basis of improving the long-term stability of the SEI film, this can also significantly improve the cycling performance and storage performance of the battery cell while maintaining a high charging capability.

In some embodiments, the BET specific surface area of the negative electrode active material in the negative electrode film layer satisfies 0.5 m²/g ≤ B ≤ 1.8 m²/g, for example, being 0.5 m²/g, 0.52 m²/g, 0.8 m²/g, 0.82 m²/g, 0.9 m²/g, 1.0 m²/g, 1.1 m²/g, 1.2 m²/g, 1.25 m²/g, 1.3 m²/g, 1.35 m²/g, 1.4 m²/g, 1.5 m²/g, 1.6 m²/g, 1.65 m²/g, 1.7 m²/g, 1.75 m²/g, or 1.8 m²/g, optionally 0.82 m²/g ≤ B ≤ 1.38 m²/g. This further reduces the effective sites on the negative electrode surface for reactions that damage the SEI film, and further enhances the stability of the negative electrode SEI film, thereby improving the cycling performance and storage performance of the battery.

In some embodiments, the negative electrode film layer further includes a second graphite negative electrode active material, a BET specific surface area of the second graphite negative electrode active material is denoted as C, A < C, and B < C; optionally, 1.3 m²/g ≤ C ≤ 1.95 m²/g, for example, being 1.3 m²/g, 1.35 m²/g, 1.4 m²/g, 1.5 m²/g, 1.6 m²/g, 1.65 m²/g, 1.7 m²/g, 1.75 m²/g, 1.8 m²/g, 1.85 m²/g, 1.9 m²/g, or 1.95 m²/g, further optionally 1.5 m²/g ≤ C ≤ 1.81 m²/g. The second graphite negative electrode active material with a larger BET specific surface area corresponds to a smaller particle size, thereby improving the charging capability of the negative electrode film layer. Further specifying the BET specific surface area of the second graphite negative electrode active material helps maximize the charging capability of the negative electrode film layer while controlling the BET specific surface area of the negative electrode active material.

The second graphite negative electrode active material may be mixed with the first graphite negative electrode active material and disposed together in the surface active material layer or may be disposed only in the inner active material layer. In some embodiments, a mass percentage of the first graphite negative electrode active material in the surface active material layer ranges from 10% to 98%; and/or a mass percentage of the second graphite negative electrode active material in the inner active material layer ranges from 10% to 98%. This fully utilizes the first graphite negative electrode active material to reduce the active sites for SEI film-damaging reactions, and utilizes the second graphite negative electrode active material to fully enhance the charging capability of the negative electrode plate. To further enhance the above effects, in some embodiments, the mass percentage of the first graphite negative electrode active material in the surface active material layer ranges from 50% to 98%; and the mass percentage of the second graphite negative electrode active material in the inner active material layer ranges from 50% to 98%.

The different masses of the first graphite negative electrode active material and the second graphite negative electrode active material result in different BET specific surface areas of the formed mixture, and further, different areas of the correspondingly formed active sites. In some embodiments, a mass ratio of the first graphite negative electrode active material to the second graphite negative electrode active material ranges from 1:9 to 9:1, optionally from 5:5 to 8:2. Appropriately increasing the mass proportion of the first graphite negative electrode active material helps reduce the number of active sites, thereby better enhancing the cycling performance and storage capability of the battery.

In some embodiments, Dᵥ50 of the first graphite negative electrode active material ranges from 10 µm to 25 µm, optionally from 15 µm to 22 µm. In some embodiments, Dᵥ50 of the second graphite negative electrode active material ranges from 7 µm to 10 µm, optionally from 8 µm to 10 µm. This further controls the BET specific surface area of the graphite negative electrode active materials.

The sources of the graphite negative electrode active materials used in this application are not particularly limited. In some embodiments, the first graphite negative electrode active material and the second graphite negative electrode active material each independently include any one or more of natural graphite, artificial graphite, graphitized carbon fiber, and graphitized mesocarbon microbeads.

In some embodiments, the negative electrode plate is a negative electrode plate used in a secondary battery, and during charging of the secondary battery, a potential of a negative electrode in a full battery reaches 0 mV before a voltage of the full battery reaches an upper limit voltage; and optionally, a positive electrode active material of the secondary battery includes a lithium manganese iron phosphate-based positive electrode active material, thereby improving the cycling performance and storage performance of the secondary battery without affecting charging capability.

In some embodiments, the negative electrode current collector may be a metal foil or a composite current collector. For example, a copper foil may be used as the metal foil. The composite current collector may include a polymer material base layer and a metal layer formed on at least one surface of the polymer material matrix. The composite current collector may be formed by forming a metal material (copper, copper alloy, nickel, nickel alloy, titanium, titanium alloy, silver, silver alloy, or the like) on the polymer material matrix (such as a matrix of polypropylene (PP), polyethylene terephthalate (PET), polybutylene terephthalate (PBT), polystyrene (PS), or polyethylene (PE)).

In some embodiments, the negative electrode active material in the negative electrode film layer may further include a silicon-based material, a tin-based material, lithium titanate, and the like. The silicon-based material may be selected from at least one of elemental silicon, a silicon-oxygen compound, a silicon-carbon composite, a silicon-nitrogen composite, or a silicon alloy. The tin-based material may be selected from at least one of elemental tin, a tin-oxygen compound, or a tin alloy. However, this application is not limited to these materials, and other conventional materials that can be used as negative electrode active materials for batteries may be used instead. These negative electrode active materials may be used alone or in combination of two or more.

In some embodiments, the negative electrode film layer further optionally includes a binder. In an example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), or carboxymethyl chitosan (CMCS).

In some embodiments, the negative electrode film layer further optionally includes a conductive agent. In an example, the conductive agent may be selected from at least one of superconducting carbon, acetylene black, carbon black, Ketjen black, carbon dots, carbon nanotubes, graphene, or carbon nanofibers.

In some embodiments, the negative electrode film layer further optionally includes other additives, such as a thickener (for example, sodium carboxymethyl cellulose (CMC-Na)).

In some embodiments, the negative electrode plate may be prepared as follows: The constituents used for preparing the negative electrode plate, for example, the negative electrode active material, the conductive agent, the binder, and any other constituent, are dispersed in a solvent (for example, deionized water) to produce a negative electrode slurry; and the negative electrode slurry is applied onto the negative electrode current collector, followed by processes such as drying and cold pressing, to obtain the negative electrode plate.

### [Secondary battery]

A secondary battery, also known as a rechargeable battery or storage battery, refers to a battery that can be recharged to reactivate an active material for continued use after discharge.

Typically, the secondary battery includes a positive electrode plate, a negative electrode plate, a separator, and an electrolyte. During the charging and discharging process of the battery, active ions (for example, lithium ions) intercalate and deintercalate back and forth between the positive electrode plate and the negative electrode plate. The separator is disposed between the positive electrode plate and the negative electrode plate, primarily to prevent short circuits between the positive and negative electrodes while allowing active ions to pass through. The electrolyte is disposed between the positive electrode plate and the negative electrode plate to primarily conduct the active ions.

The negative electrode plate of the secondary battery in this application includes the negative electrode plate according to any one of the above embodiments of this application.

The positive electrode plate typically includes a positive electrode current collector and a positive electrode film layer disposed on at least one side of the positive electrode current collector, where the positive electrode film layer includes a positive electrode active material.

In an example, the positive electrode current collector has two opposite surfaces in its thickness direction, and the positive electrode film layer is disposed on either or both of the two opposite surfaces of the positive electrode current collector.

In some embodiments, the secondary battery of this application is a secondary battery of the lithium manganese iron phosphate system, the positive electrode plate includes a positive electrode active material, the positive electrode active material includes a lithium manganese iron phosphate-based positive electrode active material, and M includes Mn and non-Mn elements.

In some embodiments, to further improve the cycling performance of the secondary battery, the non-Mn element is set to include one or both of a first doping element and a second doping element, where the first doping element is doped at a manganese site, and the second doping element is doped at a phosphorus site; optionally, the first doping element includes one or more elements selected from a group of Zn, Al, Na, K, Mg, Mo, W, Ti, V, Zr, Fe, Ni, Co, Ga, Sn, Sb, Nb, and Ge; further optionally, the first doping element includes at least two elements selected from a group of Fe, Ti, V, Ni, Co, and Mg; optionally, the second doping element includes one or more elements selected from a group of B (boron), S, Si, and N. This further enhances the compositional stability of the positive electrode material and reduces positive electrode side reactions.

In some embodiments, the lithium manganese iron phosphate-based positive electrode active material includes, but is not limited to, a doped lithium manganese iron phosphate-based positive electrode active material and a coated lithium manganese iron phosphate-based positive electrode active material. In some embodiments, the lithium manganese iron phosphate-based positive electrode active material includes at least one of the following materials:
LiMn_{1-y}Fe_{y}PO₄, where y is any value in a range of 0.001 to 0.5;
Li₁₊ₜMn_{1-c}Fe_{c}P_{1-z}R_{z}O₄, where t is any value in a range of -0.100 to 0.100, c is any value in a range of 0.001 to 0.500, z is any value in a range of 0.001 to 0.100, and R includes one or more elements selected from B, S, Si, and N; or
Li_{1+w}AₘMn₁₋ᵤEᵤP₁₋ₐRₐO₄₋ₙDₙ, where A includes one or more elements selected from Zn, Al, Na, K, Mg, Nb, Mo, and W, E includes one or more elements selected from Zn, Al, Na, K, Mg, Mo, W, Ti, V, Zr, Fe, Ni, Co, Ga, Sn, Sb, Nb, and Ge, R includes one or more elements selected from B, S, Si, and N, D includes one or more elements selected from S, F, Cl, and Br, w is any value in a range of -0.100 to 0.100, m is any value in a range of 0.001 to 0.1, u is any value in a range of 0.001 to 0.500, a is any value in a range of 0.001 to 0.100, n is any value in a range of 0.001 to 0.1, and Li_{1+w}AₘMn₁₋ᵤEᵤP₁₋ₐRₐO₄₋ₙDₙ is electrically neutral. Doping elements in lithium manganese iron phosphate helps enhance the structural stability of the lithium manganese iron phosphate positive electrode material and the rate performance of the secondary battery containing this material.

Element A doped at the manganese site of lithium manganese phosphate helps reduce the lattice change rate of lithium manganese phosphate during lithium intercalation and deintercalation, enhances the structural stability of the lithium manganese phosphate positive electrode material, significantly reduces manganese dissolution, and lowers the oxygen activity on the particle surface. Element R doped at the phosphorus site helps adjust the ease of Mn-O bond length variation, thereby lowering the lithium-ion migration barrier, promoting lithium-ion migration, and improving the rate performance of the secondary battery.

Doping at the P site and O site also affects Mn dissolution in antisite defects and kinetic performance. Therefore, doping reduces the antisite defect concentration in the material, improves the kinetic performance and gram capacity of the material, and also changes the morphology of particles, thereby increasing the compacted density. In summary, doping specific elements in specific amounts at the Li, Mn, P, and O sites of the compound LiMnPO₄ can achieve significantly improved rate performance, significantly reduce the dissolution of Mn and Mn-site doping elements, obtain significantly improved cycling performance and/or high-temperature stability, and also enhance the gravimetric capacity and compacted density of the material.

M in the positive electrode material LiMPO₄ designed in this solution may include element Mn and element Fe. In a possible embodiment, LiMPO₄ may be a compound LiMn_{1-y}Fe_{y}PO₄.

For example, the preparation method of the compound LiMn_{0.50}Fe_{0.50}PO₄ includes the following steps.

Step S1: Prepare Fe-doped manganese oxalate.

574.7 g of manganese carbonate and 579.3 g of ferrous carbonate are added to a mixer and thoroughly mixed for 6 hours. The resulting mixture is then transferred to a reactor, and 5 L of deionized water and 1260.6 g of oxalic acid dihydrate are added, followed by heating to 80°C. Thorough stirring was performed at 500 rpm for 6 hours until the reaction terminates with no bubbles generated, to yield a Fe-doped manganese oxalate suspension. The suspension is filtered, dried at 120°C, and subjected to sand milling to obtain manganese iron oxalate particles with a particle size of 100 nm.

Step S2: Prepare LiMn_{0.50}Fe_{0.50}PO₄.

1791.4 g of the manganese iron oxalate prepared in Step S1 (calculated with C₂O₄Mn_{0.50}Fe_{0.40}•2H₂O), 369.4 g of lithium carbonate, and 1150.1 g of ammonium dihydrogen phosphate are added to 20 L of deionized water, thoroughly stirred, and mixed to uniformity at 80°C for 10 hours to obtain a slurry. The slurry is transferred to spray drying equipment for spray drying and granulation at 250°C to obtain powder. In a protective atmosphere (90% nitrogen and 10% hydrogen), the powder is sintered in a roller kiln at 700°C for 4 hours.

The positive electrode active material may be a compound with a chemical formula Li₁₊ₜMn_{1-c}Fe_{c}P_{1-z}R_{z}O₄, where t is any value in a range of -0.100 to 0.100, c is any value in a range of 0.001 to 0.500, z is any value in a range of 0.001 to 0.100, and R includes one or more elements selected from B (boron), S, Si, and N. The values of t, c, and z satisfy the condition of keeping the entire compound electrically neutral. A ratio of c to 1-c ranges from 1:10 to 1:1, optionally from 1:4 to 1:1. Herein, c represents a sum of the stoichiometric numbers of the doping element Fe at the Mn sites. In some embodiments, a ratio of z to 1-z ranges from 1:9 to 1:999, optionally from 1:499 to 1:249. Herein, z represents a sum of the stoichiometric numbers of the doping element R at the P sites.

The preparation method of the compound Li₁₊ₜMn_{1-c}Fe_{c}P_{1-z}R_{z}O₄ may include the following steps.
(1) A manganese source, an iron source, and an acid are dissolved in a solvent and stirred to generate a suspension of manganese salt doped with element Fe, the suspension is filtered, and the filter cake is dried to obtain a manganese salt doped with element Fe. (2) A lithium source, a phosphorus source, a source of element R, a solvent, and the manganese salt doped with element Fe obtained from step (1) are added to a reaction vessel, ground and mixed to obtain a slurry. (3) The slurry obtained from step (2) is transferred to spray drying equipment for spray drying and granulation to obtain particles. (4) The particles obtained from step (3) are sintered to obtain the positive electrode active material.

In any embodiment, the manganese source may be a manganese-containing substance known in the art for preparing lithium manganese phosphate, such as one or a combination of elemental manganese, manganese dioxide, manganese phosphate, manganese oxalate, and manganese carbonate. The iron source is selected from at least one of elemental iron, oxide, phosphate, oxalate, carbonate, or sulfate. The acid is selected from one or more of hydrochloric acid, sulfuric acid, nitric acid, phosphoric acid, and organic acid such as oxalic acid, for example, may be oxalic acid. The source of element R is selected from at least one of sulfate, borate, nitrate, or silicate of element R.

For example, the preparation method of the compound Li_{1.001}Mn_{0.999}Fe_{0.001}P_{0.999}Si_{0.001}O₄ includes the following steps.

Step S1: Prepare Fe-doped manganese oxalate.

1148.2 g of manganese carbonate and 1.2 g of ferrous carbonate are added to a mixer and thoroughly mixed for 6 hours. The resulting mixture is then transferred to a reactor, and 5 L of deionized water and 1260.6 g of oxalic acid dihydrate are added, followed by heating to 80°C. Thorough stirring is performed at 500 rpm for 6 hours until the reaction terminates with no bubbles generated, to yield a Fe-doped manganese oxalate suspension. The suspension is filtered, dried at 120°C, and subjected to sand milling to obtain manganese iron oxalate particles with a particle size of 100 nm.

Step S2: Prepare Li_{1.001}Mn_{0.999}Fe_{0.001}P_{0.999}Si_{0.001}O₄.

1789.6 g of the manganese iron oxalate prepared in Step S1 (calculated with C₂O₄Mn_{0.999}Fe_{0.001}•2H₂O), 369.8 g of lithium carbonate, 1148.9 g of ammonium dihydrogen phosphate, and 0.8 g of silicic acid are added to 20 L of deionized water, thoroughly stirred, and mixed to uniformity at 80°C for 10 hours to obtain a slurry. The slurry is transferred to spray drying equipment for spray drying and granulation at 250°C to obtain powder. In a protective atmosphere (90% nitrogen and 10% hydrogen), the powder is sintered in a roller kiln at 700°C for 4 hours.

In some embodiments, the positive electrode active material may be a compound with a chemical formula Li_{1+w}CₘMn₁₋ᵤFeᵤP₁₋ₐRₐO₄₋ₙDₙ, where C includes one or more elements selected from Zn, Al, Na, K, Mg, Nb, Mo, and W, R includes one or more elements selected from B (boron), S, Si, and N, D includes one or more elements selected from S, F, Cl, and Br, w is any value in a range of -0.100 to 0.100, u is any value in a range of 0.001 to 0.500, a is any value in a range of 0.001 to 0.100, n is any value in a range of 0.001 to 0.1, and m is any value in a range of 0.9 to 1.1. Similarly, the values of w, u, a, and m satisfy the condition of keeping the entire compound electrically neutral.

The preparation method of the compound Li_{1+w}AₘMn₁₋ᵤEᵤP₁₋ₐRₐO₄₋ₙDₙ may include the following steps.
(1) A manganese source, an iron source, and an acid are dissolved in a solvent and stirred to generate a suspension of manganese salt doped with element E, the suspension is filtered, and the filter cake is dried to obtain a manganese salt doped with element E. (2) A lithium source, a phosphorus source, a source of element A, a source of element R, a source of element D, a solvent, and the manganese salt doped with element E obtained from step (1) are added to a reaction vessel, ground and mixed to obtain a slurry. (3) The slurry obtained from step (2) is transferred to spray drying equipment for spray drying and granulation to obtain particles, (4) The particles obtained from step (3) are sintered to obtain the positive electrode active material.

In any embodiment, the source of element A is selected from at least one of elemental A, oxides, phosphates, oxalates, carbonates, and sulfates, the manganese source may be a manganese-containing substance known in the art for preparing lithium manganese phosphate. For example, the manganese source may be selected from one or a combination of elemental manganese, manganese dioxide, manganese phosphate, manganese oxalate, and manganese carbonate. The iron source is selected from at least one of elemental iron, oxide, phosphate, oxalate, carbonate, or sulfate. The acid is selected from one or more of hydrochloric acid, sulfuric acid, nitric acid, phosphoric acid, and organic acid such as oxalic acid, for example, may be oxalic acid. The source of element R is selected from at least one of sulfate, borate, nitrate, or silicate of element R, and the source of element D is selected from at least one of elemental D or ammonium salt.

For an embodiment that the positive electrode active material may contain Li_{1+w}AₘMn₁₋ᵤEᵤP₁₋ₐRₐO₄₋ₙDₙ, the value of w is influenced by the valence states of E and R and the values of y and z, to ensure the entire system remains electrically neutral. If the value of w is too small, the lithium content of the entire system decreases, affecting the gram capacity of the material. The value of u limits the total amount of all doping elements. If the value of u is too small, meaning the doping amount is too low, the doping elements have no effect; and if the value of u exceeds 0.5, the Mn content in the system is low, affecting the voltage plateau of the material. The R element is doped at the P site. Since the P-O tetrahedron is relatively stable, but an excessively large value of a affects the stability of the material, the value of a is limited to 0.001 to 0.100. More specifically, w is any value in a range of -0.100 to 0.100, m is any value in a range of 0.001 to 0.1, u is any value in a range of 0.001 to 0.500, a is any value in a range of 0.001 to 0.100, and n is any value in a range of 0.001 to 0.1. For example, 1+w is selected from a range of 0.9 to 1.1, for example, being 0.97, 0.977, 0.984, 0.988, 0.99, 0.991, 0.992, 0.993, 0.994, 0.995, 0.996, 0.997, 0.998, or 1.01; m is selected from a range of 0.001 to 0.1, for example, being 0.001 or 0.005; u is selected from a range of 0.001 to 0.5, for example, being 0.001, 0.005, 0.02, 0.05, 0.1, 0.15, 0.2, 0.25, 0.3, 0.34, 0.345, 0.349, 0.35, or 0.4; a is selected from a range of 0.001 to 0.1, for example, being 0.001, 0.005, 0.08, or 0.1; n is selected from a range of 0.001 to 0.1, for example, being 0.001, 0.005, 0.08, or 0.1; and the positive electrode active material is electrically neutral.

Unless otherwise specified, in the above chemical formulas, when a doping site has two or more elements, the limitations on the numerical ranges of w, u, a, m, or n apply not only to the stoichiometric number of each element at that site but also to the sum of the stoichiometric numbers of all elements at that site. For example, for a compound with the chemical formula Li₁₊ₜMn_{1-c}Fe_{c}P_{1-z}R_{z}O₄, when R consists of two or more elements R1, R2, ..., Rn, the stoichiometric numbers z1, z2, ..., zn of R1, R2, ..., Rn all fall within the numerical range defined for z in this application, and the sum of z1, z2, ..., zn also falls within that numerical range. Similarly, for a case that A consists of two or more elements, the numerical range limitations for the stoichiometric number of A in this application have the same meaning as described above.

In some embodiments, optionally, the lithium manganese iron phosphate-based positive electrode active material further includes a coating layer, and the coating layer may optionally be one or more layers of pyrophosphate, phosphate, or carbon. Since the migration barrier of transition metals in pyrophosphate is relatively high (>1 eV), the dissolution of transition metals can be effectively suppressed. Phosphate has excellent lithium ion conductivity, thereby reducing the content of lithium impurities on the surface. The carbon layer can effectively improve the electrical conductivity and desolvation capability of LiMnPO₄, and can also act as a "barrier" to further hinder the migration of manganese ions into the electrolyte and reduce the corrosion of the active material by the electrolyte. Additionally, the carbon layer in the mixture can also optimize the conductive network around the ternary positive electrode material, improving the mixing uniformity of the lithium manganese iron phosphate-based positive electrode material and the ternary positive electrode material.

In some embodiments, the positive electrode current collector may be a metal foil or a composite current collector. For example, an aluminum foil is used as the metal foil. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on the polymer material matrix (such as a matrix of polypropylene (PP), polyethylene terephthalate (PET), polybutylene terephthalate (PBT), polystyrene (PS), or polyethylene (PE)).

In some embodiments, the positive electrode film layer further optionally includes a binder. In an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorinated acrylate resin.

In some embodiments, the positive electrode film layer further optionally includes a conductive agent. In an example, the conductive agent may include at least one of superconducting carbon, acetylene black, carbon black, Ketjen black, carbon dots, carbon nanotubes, graphene, or carbon nanofibers.

In some embodiments, the positive electrode plate may be prepared as follows: Constituents used for preparing the positive electrode plate, such as the positive electrode active material, conductive agent, binder, and any other constituents, were dispersed in a solvent (for example, N-methylpyrrolidone) to produce a positive electrode slurry; and the positive electrode slurry was applied onto the positive electrode current collector, followed by processes such as drying and cold pressing, to obtain the positive electrode plate.

### [Electrolyte]

The electrolyte conducts ions between the positive electrode plate and the negative electrode plate. The electrolyte is not specifically limited to any particular type in this application and may be selected based on needs. For example, the electrolyte may be in liquid state, gel state, or all-solid state.

In some embodiments, the electrolyte is in liquid state and includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, or lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, or diethyl sulfone.

In some embodiments, the electrolyte further optionally includes an additive. In an example, the additive may include a negative electrode film-forming additive, a positive electrode film-forming additive, and an additive capable of improving certain battery performance, such as an additive for improving overcharge protection performance or an additive for improving high-temperature performance or low-temperature performance of the battery.

### [Separator]

In some embodiments, the secondary battery further includes a separator. This application imposes no particular restrictions on a type of the separator, and any known porous structure separator with good chemical and mechanical stability may be used.

In some embodiments, a material of the separator may be selected from at least one of glass fiber, nonwoven fabric, polyethylene, polypropylene, or polyvinylidene fluoride. The separator may be a single-layer film or a multi-layer composite film, which is not particularly limited. When the separator is a multi-layer composite film, materials of all layers may be the same or different, which is not particularly limited.

In some embodiments, the positive electrode plate, the negative electrode plate, and the separator may be made into an electrode assembly through winding or lamination.

In some embodiments, the secondary battery may include an outer package. The outer package may be used to package the electrode assembly and the electrolyte.

In some embodiments, the outer package of the secondary battery may be a hard shell, such as a hard plastic shell, an aluminum shell, or a steel shell. The outer package of the secondary battery may alternatively be a soft package, such as a pouch bag. A material of the soft package may be plastic, such as polypropylene, polybutylene terephthalate, or polybutylene succinate.

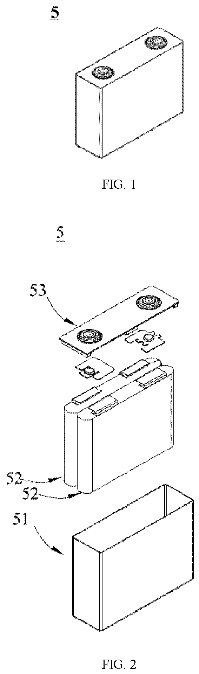

This application imposes no particular restrictions on a shape of the secondary battery, which may be cylindrical, prismatic, or any other shape. For example, FIG. 1 shows a secondary battery cell 5 with a prismatic structure as an example.

In some embodiments, referring to FIG. 2, the outer package may include a housing 51 and a top cover assembly 53. The housing 51 may include a bottom plate and side plates connected to the bottom plate, and the bottom plate and the side plates enclose an accommodating cavity. The housing 51 has an opening communicating with the accommodating cavity, and the top cover assembly 53 covers the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. One or more electrode assemblies 52 may be contained in the secondary battery cell 5, and the specific quantity may be selected by those skilled in the art based on specific practical requirements.

In some embodiments, the secondary battery may be assembled into a battery module. One or more secondary batteries may be contained in the battery module, and the specific quantity may be selected by those skilled in the art based on the application and capacity of the battery module.

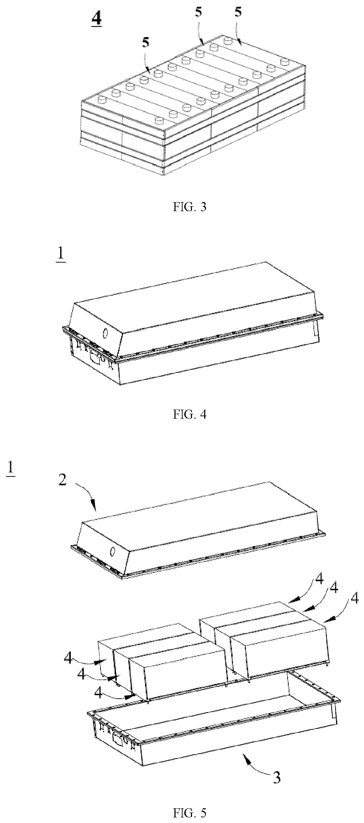

FIG. 3 shows a battery module 4 as an example. Referring to FIG. 3, in the battery module 4, multiple secondary battery cells 5 may be sequentially arranged along a length direction of the battery module 4, and certainly, may alternatively be arranged in any other manner. Further, the multiple secondary battery cells 5 are fixed by fasteners.

Optionally, the battery module 4 may further include a housing having an accommodating space, and the multiple secondary battery cells 5 are accommodated in the accommodating space.

In some embodiments, the battery module may be further assembled into a battery pack. One or more battery modules may be contained in the battery pack, and the specific quantity may be selected by those skilled in the art based on the application and capacity of the battery pack.

FIG. 4 and FIG. 5 show a battery pack 1 as an example. Referring to FIG. 4 and FIG. 5, the battery pack 1 includes a battery box and multiple battery modules 4 disposed in the battery box. The battery box includes an upper box body 2 and a lower box body 3. The upper box body 2 is capable of covering the lower box body 3 to form a closed space for accommodating the battery modules 4. The multiple battery modules 4 may be arranged in the battery box in any manner.

Additionally, this application further provides an electric apparatus. The electric apparatus includes at least one of the secondary battery provided in this application, a battery module, or a battery pack. The secondary battery, the battery module, or the battery pack may serve as a power source or an energy storage unit for the electric apparatus. The electric apparatus may include a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf cart, or an electric truck), an electric train, ship, or satellite, or an energy storage system, but is not limited thereto.

The electric apparatus may use the secondary battery, the battery module, or the battery pack based on use requirements of the electric apparatus.

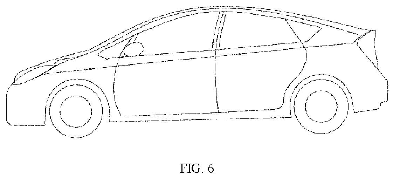

FIG. 6 shows an electric apparatus as an example. The electric apparatus is a battery electric vehicle, a hybrid electric vehicle, or a plug-in hybrid electric vehicle. To meet the demand for high power and high charging capability of the secondary battery in the electric apparatus, a battery pack or a battery module may be used.

### [Examples]

The following describes examples of this application. The examples described below are exemplary, intended solely to explain this application, and cannot be construed as limiting this application. For examples where specific techniques or conditions are not specified, the techniques or conditions described in the literature in the field or according to product instructions are followed. The reagents or instruments used are conventional products commercially available if no manufacturer is indicated.

Parameters and sources of the graphite used are shown in Table 1.

**Table 1**

| Graphite No. | BET specific surface area (m²/g) | Dᵥ50 (µm) |
|---|---|---|
| 1 | 0.53 | 22.1 |
| 2 | 0.82 | 18.9 |
| 3 | 1.03 | 17.3 |
| 4 | 1.22 | 15.5 |
| 5 | 1.35 | 13.4 |
| 6 | 1.52 | 10.1 |
| 7 | 1.81 | 9.4 |
| 8 | 1.93 | 8.5 |
| 9 | 2.01 | 7.3 |

The composition of the negative electrode slurry in the following examples and comparative examples is as follows: graphite: conductive agent:binder = 96.7:1.5:1.8, with the graphite composition in the negative electrode slurry shown in Table 2, the binder being SBR, and the conductive agent being SP.

**Table 2**

| Negative electrode slurry | Component 1 | Component 2 | Mass ratio of component 1 to component 2 | BET specific surface area (m²/g) (with components 1 and 2 mixed) |
|---|---|---|---|---|
| 1 | Graphite No. 2 | Graphite No. 7 | 10:0 | 0.82 |
| 2 | Graphite No. 2 | Graphite No. 7 | 0:10 | 1.81 |
| 3 | Graphite No. 2 | Graphite No. 7 | 5:5 | 1.52 |
| 4 | Graphite No. 2 | Graphite No. 7 | 1:9 | 1.78 |
| 5 | Graphite No. 2 | Graphite No. 7 | 2:8 | 1.72 |
| 6 | Graphite No. 2 | Graphite No. 7 | 4:6 | 1.59 |
| 7 | Graphite No. 2 | Graphite No. 7 | 6:4 | 1.38 |
| 8 | Graphite No. 2 | Graphite No. 7 | 8:2 | 1.21 |
| 9 | Graphite No. 2 | Graphite No. 7 | 9:1 | 1.11 |
| 10 | Graphite No. 1 | Graphite No. 8 | 5:5 | 1.54 |
| 11 | Graphite No. 3 | Graphite No. 6 | 5:5 | 1.27 |
| 12 | Graphite No. 4 | Graphite No. 5 | 5:5 | 1.29 |
| 13 | Graphite No. 1 | Graphite No. 9 | 5:5 | 1.27 |
| 14 | Graphite No. 1 | Graphite No. 7 | 10:0 | 0.53 |

### Preparation of negative electrode plate

### Example 1

Negative electrode slurry 1 was evenly applied onto both sides of the copper foil current collector at a coating weight of 0.162 g/1540 mm², vacuum-dried at 100°C-120°C for 14 hours, and compacted by a roller press to form a negative electrode film layer, to obtain a negative electrode plate P1.

### Example 2

Negative electrode slurry 3 was evenly applied onto both sides of the copper foil current collector at a coating weight of 0.162 g/1540 mm², with other steps identical to Example 1, to obtain a negative electrode plate P2.

### Example 3

The negative electrode slurry 1 and negative electrode slurry 2 were sequentially applied to both sides of the copper foil, with the slurry coating weight of each layer being 0.010 g/cm², then vacuum-dried at 100°C-120°C for 14 hours, and compacted by a roller press to form a negative electrode film layer, to obtain a negative electrode plate P3, where the negative electrode slurry 1 formed the inner active material layer, and the negative electrode slurry 2 formed the surface active material layer.

### Example 4

The negative electrode slurry 2 and negative electrode slurry 1 were sequentially applied onto both sides of the copper foil, with the slurry coating weight of each layer being 0.081 g/1540 mm², with other steps identical to Example 3, to obtain a negative electrode plate P4, where the negative electrode slurry 2 formed the inner active material layer, and the negative electrode slurry 1 formed the surface active material layer.

### Example 5

The negative electrode slurry 1 and negative electrode slurry 3 were sequentially applied onto both sides of the copper foil, with the slurry coating weight of each layer being 0.081 g/1540 mm², with other steps identical to Example 3, to obtain a negative electrode plate P5, where the negative electrode slurry 1 formed the inner active material layer, and the negative electrode slurry 3 formed the surface active material layer.

### Example 6

The negative electrode slurry 3 and negative electrode slurry 1 were sequentially applied onto both sides of the copper foil, with the slurry coating weight of each layer being 0.081 g/1540 mm², with other steps identical to Example 3, to obtain a negative electrode plate P6, where the negative electrode slurry 3 formed the inner active material layer, and the negative electrode slurry 1 formed the surface active material layer.

### Example 7

The negative electrode slurry 2 and negative electrode slurry 3 were sequentially applied onto both sides of the copper foil, with the slurry coating weight of each layer being 0.081 g/1540 mm², with other steps identical to Example 3, to obtain negative electrode plate P7, where the negative electrode slurry 2 formed the inner active material layer, and the negative electrode slurry 3 formed the surface active material layer.

### Example 8

The negative electrode slurry 3 and negative electrode slurry 2 were sequentially applied onto both sides of the copper foil, with the slurry coating weight of each layer being 0.081 g/1540 mm², with other steps identical to Example 3, to obtain a negative electrode plate P8, where the negative electrode slurry 3 formed the inner active material layer, and the negative electrode slurry 2 formed the surface active material layer.

### Example 9

The negative electrode slurry 4 was evenly applied onto both sides of the copper foil at a coating weight of 0.162 g/1540 mm², vacuum-dried at 100°C-120°C for 14 hours, and compacted by a roller press to form a negative electrode film layer, thereby obtaining a negative electrode plate P9.

### Example 10

The negative electrode slurry 5 was evenly applied onto both sides of the copper foil at a coating weight of 0.162 g/1540 mm², vacuum-dried at 100°C-120°C for 14 hours, and compacted by a roller press to form a negative electrode film layer, thereby obtaining a negative electrode plate P10.

### Example 11

The negative electrode slurry 6 was evenly applied onto both sides of the copper foil at a coating weight of 0.162 g/1540 mm², vacuum-dried at 100°C-120°C for 14 hours, and compacted by a roller press to form a negative electrode film layer, thereby obtaining a negative electrode plate P11.

### Example 12

The negative electrode slurry 7 was evenly applied onto both sides of the copper foil at a coating weight of 0.162 g/1540 mm², vacuum-dried at 100°C-120°C for 14 hours, and compacted by a roller press to form a negative electrode film layer, thereby obtaining a negative electrode plate P12.

### Example 13

The negative electrode slurry 8 was evenly applied onto both sides of the copper foil at a coating weight of 0.162 g/1540 mm², vacuum-dried at 100°C-120°C for 14 hours, and compacted by a roller press to form a negative electrode film layer, thereby obtaining a negative electrode plate P13.

### Example 14

The negative electrode slurry 9 was evenly applied onto both sides of the copper foil at a coating weight of 0.162 g/1540 mm², vacuum-dried at 100°C-120°C for 14 hours, and compacted by a roller press to form a negative electrode film layer, thereby obtaining a negative electrode plate P14.

### Example 15

The negative electrode slurry 10 was evenly applied onto both sides of the copper foil at a coating weight of 0.162 g/1540 mm², vacuum-dried at 100°C-120°C for 14 hours, and compacted by a roller press to form a negative electrode film layer, thereby obtaining a negative electrode plate P15.

### Example 16

The negative electrode slurry 11 was evenly applied onto both sides of the copper foil at a coating weight of 0.162 g/1540 mm², vacuum-dried at 100°C-120°C for 14 hours, and compacted by a roller press to form a negative electrode film layer, thereby obtaining a negative electrode plate P16.

### Example 17

The negative electrode slurry 12 was evenly applied onto both sides of the copper foil at a coating weight of 0.162 g/1540 mm², vacuum-dried at 100°C-120°C for 14 hours, and compacted by a roller press to form a negative electrode film layer, thereby obtaining a negative electrode plate P17.

### Example 18

The negative electrode slurry 13 was evenly applied onto both sides of the copper foil at a coating weight of 0.162 g/1540 mm², vacuum-dried at 100°C-120°C for 14 hours, and compacted by a roller press to form a negative electrode film layer, thereby obtaining a negative electrode plate P18.

### Example 19

The negative electrode slurry 14 was evenly applied onto both sides of the copper foil at a coating weight of 0.162 g/1540 mm², vacuum-dried at 100°C-120°C for 14 hours, and compacted by a roller press to form a negative electrode film layer, thereby obtaining a negative electrode plate P19.

### Comparative Example 1

The negative electrode slurry 2 was evenly applied onto both sides of the aluminum foil current collector at a coating weight of 0.162 g/1540 mm², vacuum-dried at 100°C-120°C for 14 hours, and compacted by a roller press to form a negative electrode film layer, thereby obtaining a negative electrode plate P20.

The thickness and compacted density of the resulting negative electrode plates were measured as follows.

Thickness test: The thickness of the cold-pressed electrode plate was measured using a micrometer, to obtain the thickness data, all around 0.133 nm.

Compacted density: A negative electrode plate of 1540 mm² was taken, and the compacted density was calculated: double-sided coating weight/1540.25 * 1000/thickness of the cold-pressed electrode plate, all around 1.65 g/cm³.

BET specific surface area of the graphite negative electrode active material in the negative electrode film layer: The BET specific surface area of the graphite negative electrode active material was measured in accordance with GB/T 19587-2017/ISO 9277:2010.

BET specific surface area of the material forming the negative electrode film layer: After the negative electrode film layer was scraped off using a powder scraping method, the BET specific surface area of the graphite negative electrode active material was measured in accordance with GB/T 19587-2017/ISO 9277:2010.

BET specific surface area of the materials forming the inner active material layer and the surface active material layer: After the inner active material layer and the surface active material layer were scraped off using a powder scraping method, the BET specific surface area of the graphite negative electrode active material was measured in accordance with GB/T 19587-2017/ISO 9277:2010.

The results are shown in Table 3.

**Table 3**

| | BET specific surface area of negative electrode active material (m²/g) | BET specific surface area of material forming negative electrode film layer (m²/g) | BET specific surface area of material forming inner active material layer (m²/g) | BET specific surface area of material forming surface active material layer (m²/g) |
|---|---|---|---|---|
| Example 1 | 0.82 | 0.89 | \ | \ |
| Example 2 | 1.53 | 1.58 | \ | \ |
| Example 3 | 1.52 | 1.55 | 0.89 | 1.87 |
| Example 4 | 1.52 | 1.55 | 1.87 | 0.89 |
| Example 5 | 1.28 | 1.32 | 0.89 | 1.59 |
| Example 6 | 1.28 | 1.34 | 1.59 | 0.89 |
| Example 7 | 1.63 | 1.68 | 1.87 | 1.59 |
| Example 8 | 1.63 | 1.68 | 1.59 | 1.87 |
| Example 9 | 1.78 | 1.83 | \ | \ |
| Example 10 | 1.72 | 1.77 | \ | \ |
| Example 11 | 1.59 | 1.63 | \ | \ |
| Example 12 | 1.38 | 1.42 | \ | \ |
| Example 13 | 1.21 | 1.25 | \ | \ |
| Example 14 | 1.11 | 1.14 | \ | \ |
| Example 15 | 1.54 | 1.58 | \ | \ |
| Example 16 | 1.27 | 1.33 | \ | \ |
| Example 17 | 1.29 | 1.36 | \ | \ |
| Example 18 | 1.27 | 1.33 | \ | \ |
| Example 19 | 0.53 | 0.59 | | |
| Comparative Example 1 | 1.81 | 1.89 | \ | \ |

### Preparation of positive electrode plate 1:

The active material LiMn_{0.6}Fe_{0.4}PO₄, conductive carbon black Super-P, and binder PVDF were thoroughly mixed in a weight ratio of 97:1:2 in an NMP solvent system, and applied onto the aluminum foil with a coating weight of 360 g/m², followed by drying, cold pressing, slitting, and cutting, to obtain the positive electrode plate 1.

### Preparation of battery cell

A three-layered PE/PP/PE porous polymer film was used as the separator.

The positive electrode plate 1, the separator, and the prepared negative electrode plate were wound in sequence. During the winding, the separator was controlled to be positioned between the positive and negative electrodes to provide isolation, while preventing the misalignment between the positive and negative electrodes and the separator. After the winding, the bare cell was obtained. The qualified bare cell was welded to the top cover via tabs, followed by encasing, baking, electrolyte injection, formation, and capacity grading. The finished battery was subjected to performance test.

### 1. Cycling performance test

Under the same conditions, the charge-discharge test was performed first, to record the battery cell's BOL (before of life) discharge capacity Cb at the first cycle. Then, the cycle life test was conducted under the test condition of 1C/1C cycling at 45°C, with the discharge capacity Ce recorded at any time. The ratio of Ce to Cb represents the capacity retention rate during the cycling process. The test was stopped when the capacity retention rate was less than or equal to 80%, indicating that the battery cell had reached the EOL (End of Life).

### 2. Storage performance test

Under the same conditions, the charge-discharge test was performed first, to record the battery cell's BOL (before of life) discharge capacity Cb at the first charge-discharge cycle. Then, the storage life test was conducted, where under the test condition of 60°C, one room-temperature capacity test was performed every 30 days (the actual test was conducted every 20--40 days), with the discharge capacity Ce recorded at any time. The ratio of Ce to Cb represents the capacity retention rate during the storage process. The test was stopped when the capacity retention rate was less than or equal to 80%, indicating that the battery cell had reached the EOL (End of Life).

### 3. Charging capability

Test method: At 25°C, the battery cell was fully discharged at a current of 0.33C (full discharge voltage of 2.0 V), then charged at a constant current of 1C to 4.1 V, and charged at a constant voltage of 4.1 V until the cutoff current reached 0.05 V. The total duration of constant-current charging and constant-voltage charging was recorded.

The test results are recorded in Table 4.

**Table 4**

| | Cycle life (cycles) (80% SOH, 45°C) | Storage life, Storage (80% SOH, 60°C) | Charging capability (min) |
|---|---|---|---|
| Example 1 | 2000 | 540 | 125 |
| Example 2 | 1510 | 300 | 124 |
| Example 3 | 1506 | 310 | 122 |
| Example 4 | 1600 | 341 | 121 |
| Example 5 | 1720 | 410 | 124 |
| Example 6 | 1816 | 450 | 125 |
| Example 7 | 1321 | 230 | 122 |
| Example 8 | 1415 | 275 | 125 |
| Example 9 | 1100 | 198 | 122 |
| Example 10 | 1322 | 235 | 124 |
| Example 11 | 1414 | 290 | 123 |
| Example 12 | 1620 | 347 | 122 |
| Example 13 | 1780 | 450 | 122 |
| Example 14 | 1888 | 496 | 123 |
| Example 15 | 1510 | 303 | 122 |
| Example 16 | 1700 | 389 | 123 |
| Example 17 | 1653 | 380 | 123 |
| Example 18 | 1693 | 398 | 123 |
| Example 19 | 2317 | 563 | 111 |
| Comparative Example 1 | 1007 | 180 | 122 |

Additionally, the active material LiMn_{0.6}Fe_{0.4}PO₄ in the positive electrode plate 1 was replaced with an equal weight of active material Li_{1.001}Mn_{0.999}Fe_{0.001}P_{0.999}Si_{0.001}O₄, to prepare the positive electrode plate 2.

The positive electrode plate 2 was separately combined with the negative electrode plates P1, P2, P3, P4, and P20, to prepare battery cells according to the above method, named Examples 20, 21, 22, 23, and Comparative Example 2, respectively. Their cycling performance, storage performance, and charging capability were tested according to the above methods, with the test results recorded in Table 5.

**Table 5**

| | Cycle life (cycles) (80% SOH, 45°C) | Storage life, Storage (80% SOH, 60°C) | Charging capability (min) |
|---|---|---|---|
| Example 20 | 2050 | 578 | 130 |
| Example 21 | 1610 | 355 | 1284 |
| Example 22 | 1586 | 362 | 127 |
| Example 23 | 1650 | 382 | 125 |
| Comparative Example 2 | 1107 | 190 | 128 |

From the cycling and storage performance test results of the examples and comparative examples in Tables 4 and 5, it is evident that different electrode plate structures exhibit varying cycling and storage performance. In the secondary batteries of the lithium manganese iron phosphate system, as the content of low-BET graphite in the negative electrode plate increases, the BET specific surface area of the film layer decreases, resulting in more significant improvements in the high-temperature cycling and storage performance of the battery cell. This is primarily because, in the secondary batteries of the lithium manganese iron phosphate system, the effective active sites of low-BET graphite are significantly reduced, greatly lowering the extent of side reactions on the negative electrode graphite surface, thereby indirectly enhancing the lifespan capability of the battery cell. However, when the BET of the graphite material used is too small, the cycling and storage performance of the battery can be improved, but the charging capability of the battery experiences a slight loss.

Although this application has been described with reference to preferred embodiments, various improvements can be made, and components therein can be replaced with equivalents without departing from the scope of this application. In particular, as long as no structural conflict exists, the technical features mentioned in each embodiment can be combined in any manner. This application is not limited to the specific embodiments disclosed in this specification but includes all technical solutions falling within the scope of the claims.

## Claims

1. A negative electrode plate comprising a current collector and a negative electrode film layer disposed on at least one side of the current collector, wherein the negative electrode film layer comprises one or more active material layers, a negative electrode active material in the negative electrode film layer comprises a first graphite negative electrode active material, a BET specific surface area of the first graphite negative electrode active material is denoted as A, and a BET specific surface area of the negative electrode active material in the negative electrode film layer is denoted as B, wherein A ≤ B; or a BET specific surface area of a material forming the negative electrode film layer is denoted as B', wherein A < B'.

2. The negative electrode plate according to claim 1, wherein the BET specific surface area of the first graphite negative electrode active material satisfies 0.5 m²/g ≤ A ≤ 1.3 m²/g; optionally, 0.8 m²/g ≤ A ≤ 1.22 m²/g.

3. The negative electrode plate according to claim 1 or 2, wherein the BET specific surface area of the material forming the negative electrode film layer satisfies 0.55 m²/g ≤ B' ≤ 1.85 m²/g, optionally 0.89 m²/g ≤ B' ≤ 1.42 m²/g; or the BET specific surface area of the negative electrode active material in the negative electrode film layer satisfies 0.5 m²/g ≤ B ≤ 1.8 m²/g, optionally 0.82 m²/g ≤ B ≤ 1.38 m²/g.

4. The negative electrode plate according to any one of claims 1 to 3, wherein the negative electrode film layer further comprises a second graphite negative electrode active material, a BET specific surface area of the second graphite negative electrode active material is denoted as C, and A < C, optionally B < C; optionally, 1.3 m²/g ≤ C ≤ 1.95 m²/g, further optionally 1.5 m²/g ≤ C ≤ 1.81 m²/g.

5. The negative electrode plate according to any one of claims 1 to 4, wherein the negative electrode film layer comprises multiple active material layers, and the first graphite negative electrode active material is disposed in a same active material layer or in different active material layers.

6. The negative electrode plate according to any one of claims 1 to 5, wherein the negative electrode film layer comprises multiple active material layers, wherein an active material layer located at a surface is defined as a surface active material layer, an active material layer between the surface active material layer and the current collector is defined as an inner active material layer, a BET specific surface area of a negative electrode active material in the surface active material layer is denoted as D, and a BET specific surface area of a negative electrode active material in the inner active material layer is denoted as E; optionally, A ≤ D < E < B; optionally, 0.5 m²/g ≤ D ≤ 1.22 m²/g, optionally 0.82 m²/g ≤ D ≤ 1.22 m²/g, and/or 0.82 m²/g ≤ E ≤ 1.81 m²/g, optionally 0.82 m²/g ≤ E ≤ 1.52 m²/g.

7. The negative electrode plate according to any one of claims 1 to 5, wherein the negative electrode film layer comprises multiple active material layers, wherein an active material layer located at a surface is defined as a surface active material layer, an active material layer between the surface active material layer and the current collector is defined as an inner active material layer, a BET specific surface area of a material forming the surface active material layer is denoted as D', and a BET specific surface area of a material forming the inner active material layer is denoted as E'; optionally, D' < B' < E'; optionally, 0.59 m²/g ≤ D' ≤ 1.77 m²/g, further optionally 0.89 m²/g ≤ D' ≤ 1.59 m²/g, and/or 0.59 m²/g ≤ E' ≤ 1.87 m²/g, further optionally 0.89 m²/g ≤ E' ≤ 1.87 m²/g.

8. The negative electrode plate according to claim 5, wherein a mass percentage of the first graphite negative electrode active material in the surface active material layer ranges from 10% to 98%; and/or the negative electrode film layer further comprises a second graphite negative electrode active material, wherein a mass percentage of the second graphite negative electrode active material in the inner active material layer ranges from 10% to 98%.

9. The negative electrode plate according to any one of claims 4 to 8, wherein a mass ratio of the first graphite negative electrode active material to the second graphite negative electrode active material ranges from 1:9 to 9:1, optionally from 5:5 to 8:2.

10. The negative electrode plate according to any one of claims 1 to 9, wherein Dᵥ50 of the first graphite negative electrode active material ranges from 10 µm to 25 µm, optionally from 15 µm to 22 µm; and/or the first graphite negative electrode active material comprises any one or more of natural graphite, artificial graphite, graphitized carbon fiber, and graphitized mesocarbon microbeads.

11. The negative electrode plate according to any one of claims 4 to 10, wherein Dᵥ50 of the second graphite negative electrode active material ranges from 7 µm to 10 µm, optionally from 8 µm to 10 µm; and/or the second graphite negative electrode active material comprises any one or more of natural graphite, artificial graphite, graphitized carbon fiber, and graphitized mesocarbon microbeads.

12. The negative electrode plate according to any one of claims 1 to 11, wherein the negative electrode plate is a negative electrode plate used in a secondary battery, and during charging of the secondary battery, a potential of a negative electrode in a full battery reaches 0 mV before a voltage of the full battery reaches an upper limit voltage; optionally, a positive electrode active material of the secondary battery comprises a lithium manganese iron phosphate-based positive electrode active material.

13. A secondary battery, comprising a positive electrode plate and a negative electrode plate, wherein the negative electrode plate comprises the negative electrode plate according to any one of claims 1 to 12.

14. The secondary battery according to claim 11, wherein the positive electrode plate comprises a positive electrode active material, wherein the positive electrode active material comprises a lithium manganese iron phosphate-based positive electrode active material; optionally, the lithium manganese iron phosphate-based positive electrode active material comprises a doped lithium manganese iron phosphate-based positive electrode active material or a coated lithium manganese iron phosphate-based positive electrode active material; optionally, the lithium manganese iron phosphate-based positive electrode active material comprises Li element, P element, Fe element, and M element, the M element comprising Mn and non-Mn elements.

15. The secondary battery according to claim 14, wherein the non-Mn element comprises one or both of a first doping element and a second doping element, wherein the first doping element is doped at a manganese site, and the second doping element is doped at a phosphorus site;
optionally, the first doping element comprises one or more elements selected from a group of Zn, Al, Na, K, Mg, Mo, W, Ti, V, Zr, Fe, Ni, Co, Ga, Sn, Sb, Nb, and Ge; further optionally, the first doping element comprises at least two elements selected from a group of Fe, Ti, V, Ni, Co, and Mg; and
optionally, the second doping element comprises one or more elements selected from a group of B (boron), S, Si, and N.

16. The secondary battery according to claim 14 or 15, wherein the lithium manganese iron phosphate-based positive electrode active material comprises at least one of the following materials:
LiMn_{1-y}Fe_{y}PO₄, wherein y is any value in a range of 0.001 to 0.5;
Li₁₊ₜMn_{1-c}Fe_{c}P_{1-z}R_{z}O₄, wherein t is any value in a range of -0.100 to 0.100, c is any value in a range of 0.001 to 0.500, z is any value in a range of 0.001 to 0.100, and R comprises one or more elements selected from B, S, Si, and N; and
Li_{1+w}AₘMn₁₋ᵤEᵤP₁₋ₐRₐO₄₋ₙDₙ, wherein A comprises one or more elements selected from Zn, Al, Na, K, Mg, Nb, Mo, and W, E comprises one or more elements selected from Zn, Al, Na, K, Mg, Mo, W, Ti, V, Zr, Fe, Ni, Co, Ga, Sn, Sb, Nb, and Ge, R comprises one or more elements selected from B, S, Si, and N, D comprises one or more elements selected from S, F, Cl, and Br, w is any value in a range of -0.100 to 0.100, m is any value in a range of 0.001 to 0.1, u is any value in a range of 0.001 to 0.500, a is any value in a range of 0.001 to 0.100, n is any value in a range of 0.001 to 0.1, and Li_{1+w}AₘMn₁₋ᵤEᵤP₁₋ₐRₐO₄₋ₙDₙ is electrically neutral.

17. An electric apparatus comprising a secondary battery, wherein the secondary battery comprises the secondary battery according to any one of claims 13 to 16.
